Europäisches Patentamt

European Patent Office

Office européen des brevets

(19)

(11) Numéro de publication : **0 210 080 B1**

# (12) FASCICULE DE BREVET EUROPEEN

(45) Date de publication du fascicule du brevet :
02.01.91 Bulletin 91/01

(51) Int. Cl.⁵ : **G05B 19/42, B23Q 15/02**

(21) Numéro de dépôt : 86400962.6

(22) Date de dépôt : 02.05.86

(54) **Procédé et installation d'usinage d'une pièce creuse par fraisage le long d'un tracé prédéterminé.**

(30) Priorité : 06.05.85 FR 8506838

(43) Date de publication de la demande :
28.01.87 Bulletin 87/05

(45) Mention de la délivrance du brevet :
02.01.91 Bulletin 91/01

(84) Etats contractants désignés :
AT BE CH DE GB IT LI LU NL SE

(56) Documents cités :
EP-A- 0 134 045
FR-A- 1 537 084

(73) Titulaire : ELECTRICITE DE FRANCE Service
National
2, rue Louis Murat
F-75008 Paris (FR)

(72) Inventeur : Oberlin, Claude
24, Avenue du Général de Gaulle
F-77210 Avon (FR)
Inventeur : Dolhen, Gérard
26, rue du Château
F-77250 Ecuelles Moret S/Loing (FR)
Inventeur : Lemarquis, Jean-Claude
29, rue de la République
F-77250 Moret S/Loing (FR)
Inventeur : Morand, Philippe
L'Aubrecay Saint Xandre B.P. 13
F-17138 Puilboreau (FR)

(74) Mandataire : Martin, Jean-Jacques et al
Cabinet REGIMBEAU 26, Avenue Kléber
F-75116 Paris (FR)

## Description

La présente invention concerne un procédé d'usinage d'une pièce creuse par fraisage le long d'un tracé prédéterminé, et plus particulièrement l'usinage d'une rainure courbe par fraisage dans la paroi d'un tube cylindrique, ainsi qu'une installation permettant la mise en oeuvre de ce procédé.

Le fraisage d'une pièce creuse, notamment le fraisage de rainures dans la paroi de tubes cylindriques, est une opération qui, de manière connue, est réalisée au moyen de fraiseuses classiques par des ouvriers qualifiés ; dans le cas d'un tube, celui-ci est généralement porté par un support mobile qui est déplacé en cours de fraisage de manière que l'ouvrier puisse réaliser le contour de rainure souhaité.

Un problème se pose dans certaines applications, notamment dans le domaine nucléaire, car, d'une part, les tubes à usiner sont généralement des tuyauteries fixes déjà installées dans un site et, d'autre part, ce site n'est pas nécessairement accessible à l'ouvrier, par exemple à cause de la proximité d'une source radioactive. Le problème se complique encore dans certaines applications du fait que les rainures doivent être creusées avec une profondeur extrêmement précise, car la toile restante en fond de rainure doit présenter une épaisseur extrêmement faible par rapport à la profondeur de fraisage et la rainure ne doit en aucun cas déboucher à l'intérieur du tube.

L'invention se propose de résoudre ce problème.

A cet effet, le procédé objet de l'invention, qui permet l'usinage d'une pièce creuse par fraisage le long d'un tracé prédéterminé par rapport à une surface théorique de celle-ci, au moyen d'une fraise montée en bout d'un arbre moteur porté par un support mobile orientable selon au moins deux degrés de liberté en basculement et au moins un degré de liberté en translation, dans lequel la quantité de matière à enlever en un point du tracé est déterminée par un écart de consigne entre la face inférieure de la fraise et une surface réelle de référence, surface intérieure ou surface extérieure de la pièce, est caractérisé en ce qu'il comprend :

– une première étape de reconnaissance de la surface extérieure de la pièce, consistant :

1. à faire parcourir à la fraise une première trajectoire à une distance constante de la surface théorique, cette distance étant choisie de manière que la fraise ne vienne jamais en contact avec la pièce, et

2. à échantillonner une série de points du tracé,

2.1 en mesurant et en mémorisant, au moyen d'un capteur intégré à la fraise, la distance séparant la face inférieure de la fraise de la surface extérieure réelle de la pièce dans l'axe de la fraise, et en déterminant l'écart relatif en chaque point échantillonné entre la surface réelle et la surface théorique

2.2 en déterminant et en mémorisant, à partir de l'écart mesuré en chaque point échantillonné et des écarts mesurés aux points adjacents, la direction de la normale à la surface extérieure réelle en chaque point échantillonné,

– une étape d'usinage, consistant à faire parcourir à nouveau à la fraise le trajet prédéterminé, la position et l'orientation de la fraise étant commandées de manière que, en chaque point de l'échantillonnage, l'axe de la fraise forme un angle constant par rapport à la normale à la surface réelle et à la direction tangente au tracé en ce point, et la distance séparant la face inférieure de la fraise de la surface de référence de la pièce soit rendue égale à l'écart de consigne pour ce point.

Certes, le document EP-A-134 045 décrit un procédé de soudure mettant en oeuvre une reconnaissance optique préalable, sur un trajet prédéterminé, en vue du calcul d'un trajet ultérieurement suivi par une tête de soudure. Le problème posé et la solution apportée dans ce document se limitent toutefois à la détermination d'un trajet sans qu'il soit question d'orientation de la tête de soudure.

Le document FR-A-I 537 084 décrit quant à lui la reconnaissance d'un trajet d'usinage d'une pièce creuse par palpage mécanique de la surface extérieure de celle-ci. Outre que ce procédé présente les inconvénients connus de tout palpage mécanique, à savoir une grande influence de l'usure des moyens de palpage sur la précision des mesures et par conséquent de l'usinage à réaliser, ce qui implique la nécessité de corrections prenant en compte cette usure, il ne traite nullement de questions d'orientation de l'outil d'usinage qui pourrait cependant consister en une fraise.

Généralement, la surface de référence est la surface intérieure de la pièce : ceci notamment lorsque l'on souhaite que subsiste en fond de rainure une toile d'épaisseur constante.

Dans ce cas, il est prévu une étape de détermination de la surface intérieure réelle de la pièce, à partir des données relatives à la surface extérieure réelle précédemment mémorisées.

Dans un premier mode de mise en oeuvre simplifié, la surface intérieure est déterminée par calcul, à partir d'une valeur d'épaisseur théorique constante dans la direction normale à la surface extérieure réelle de la pièce.

Dans un second mode de mise en oeuvre, préférentiel, l'étape de détermination de la surface intérieure de la pièce est une seconde étape de reconnaissance, consistant à faire parcourir à la fraise une seconde trajectoire le long de laquelle, en chaque point de l'échantillonnage, on positionne la fraise à une distance constante de la surface extérieure réelle de la pièce et avec une orientation telle que son axe coïncide avec la direction normale correspondante, puis on mesure et on mémorise, au moyen d'un capteur de profondeur intégré à la fraise, l'épaisseur de la pièce, de manière à déterminer la position de la surface intérieure de la pièce en ce point. On est ainsi assuré que l'épaisseur de la toile sera constante quelle que soit la forme extérieure et quelle que soit l'épaisseur effective de la pièce.

Le document FR-A-1 537 084 précité décrit certes également une reconnaissance de l'épaisseur de la pièce à usiner mais, d'une part, cette reconnaissance s'effectue par palpage mécanique et présente les inconvénients déjà mentionnés qui en découlent et, d'autre part, cette reconnaissance ne faisant pas intervenir l'orientation de l'outil d'usinage ne permet pas de garantir une épaisseur de toile constante, en fond de rainure, après usinage et oblige donc à prévoir, par sécurité, un surcroît de cette épaisseur si l'on veut éviter les risques d'une perforation de la pièce à l'usinage.

Dans le cas particulier de l'usinage d'une rainure courbe dans la paroi d'un tube cylindrique, on soumet le support mobile simultanément aux trois mouvements suivants :

· une rotation autour d'un axe - que nous appellerons axe principal - qui est sécant et perpendiculaire à l'axe du tube,

· un basculement autour d'un axe - que nous appellerons axe secondaire - qui coupe l'axe de la fraise et est perpendiculaire au plan formé par ce dernier et par l'axe principal,

· une translation suivant une direction parallèle à l'axe principal,

ces deux derniers mouvements étant asservis au premier de telle sorte que l'axe de la fraise soit constamment sensiblement perpendiculaire à la paroi du tube, et que la profondeur de pénétration de la fraise dans la paroi du tube soit constamment contrôlée.

On comprend aisément que ce procédé permet d'obtenir une rainure dont le fond (plat) est parallèle à la zone de la paroi interne du tube qui se trouve en regard de la rainure, de l'autre côté de la toile subsistante, et qu'en contrôlant correctement la pénétration de la fraise, on peut obtenir une épaisseur de toile constante.

Dans une application usuelle de procédé, on réalise la rotation de support mobile autour de l'axe principal avec un rayon variable ; pour obtenir une rainure à contour fermé dont la forme est voisine du cercle, on réalise la rotation du support mobile autour de l'axe principal sur un angle au moins égal à 360°.

L'installation d'usinage d'une rainure courbe par fraisage dans la paroi d'un tube cylindrique, qui permet de mettre en oeuvre le procédé décrit, comprend:

· un bâti fixe par rapport au tube,

· une armature guidée en translation sur le bâti pour coulisser suivant une direction perpendiculaire à l'axe du tube,

· un plateau guidé en rotation sur l'armature pour tourner autour d'un axe principal qui est sécant et perpendiculaire à l'axe du tube,

· un chariot guidé en translation sur le plateau pour coulisser suivant un axe sécant et perpendiculaire à l'axe principal,

· un étrier articulé sur le chariot pour basculer autour d'un axe secondaire qui est orthogonal à l'axe de coulissement du chariot,

· une fraise montée en bout sur un arbre qui est guidé en rotation dans l'étrier articulé et dont l'axe est sécant et perpendiculaire à l'axe secondaire,

· un moyen de commande du déplacement de ladite armature sur le bâti fixe,

· un moyen de commande de la rotation dudit plateau sur l'armature,

· un moyen de commande du déplacement dudit chariot sur le plateau,

· un moyen de commande du basculement dudit étrier autour de l'axe secondaire,

· un moyen de commande de la rotation de la fraise sur son axe.

Cette installation est de préférence équipée d'un calculateur à mémoire qui assure le pilotage des moyens de commande en asservissement avec le mouvement de rotation de plateau autour de l'axe principal, de telle manière que l'axe de la fraise soit constamment sensiblement perpendiculaire à la paroi du tube, et que la pénétration de la fraise dans la paroi du tube se fasse de manière contrôlée.

Par ailleurs, chaque axe électrique est de préférence pourvu de son propre capteur de position.

Les moyens de commande de la rotation du plateau et du basculement de l'étrier sont avantageusement des moteurs électriques à commande analogique, tandis que les moyens de commande du coulissement de l'armature et de coulissement du chariot sont des vérins et/ou des moteurs électriques à commande numérique.

Afin de réaliser la détection et la mesure préliminaire des inégalités éventuelles de la surface extérieure du tube, en vue de corriger les mouvements de la fraise durant l'usinage, l'installation est équipée avantageusement d'une fibre optique intégrée dans la fraise.

Afin de réaliser la mesure préliminaire de l'épaisseur réelle du tube, en vue de corriger éventuellement les mouvements de la fraise durant l'usinage, l'installation est équipée avantageusement d'une pastille à ultra-sons qui est adaptée pour être montée en bout de l'arbre de fraise, à la place de cette dernière.

D'autres caractéristiques et avantages de l'invention apparaîtront de la description et des dessins annexés qui présentent un mode de réalisation préférentiel de l'invention.

· Les figures 1 et 2 illustrent les deux étapes de reconnaissance préalable de la surface de la pièce à usiner,

· les figures 3 à 5 sont des organigrammes décrivant les phases successives de chacune des étapes du procédé,

· la figure 6 est une vue schématique du capteur optique intégré à la fraise, permettant la reconnaissance de la surface extérieure de la pièce.

· la figure 7 est une vue schématique en perspective représentant l'installation et illustrant le procédé de l'invention,

· la figure 8 est une vue de face, partiellement coupée, de l'installation d'usinage montée sur un tube à usiner, avant usinage,

· la figure 9 est une vue de côté, coupée sur le plan brisé IX-IX de l'installation de la figure 8,

· la figure 10 est une vue de dessus partielle de l'installation des figures 2 et 3, représentée en cours d'usinage,

· la figure 11 est une vue de face coupée par le plan XI-XI de l'installation de la figure 10, en cours d'usinage.

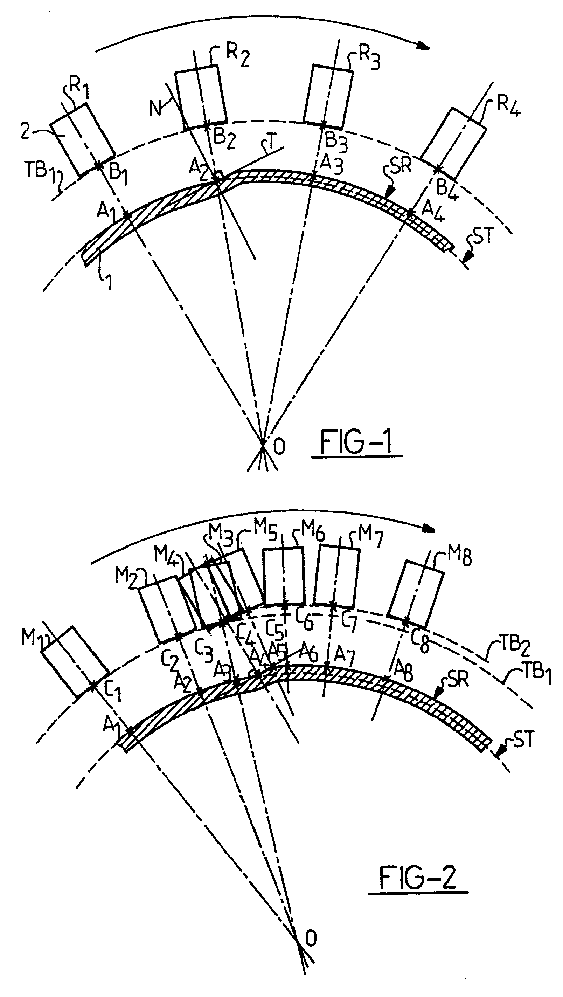

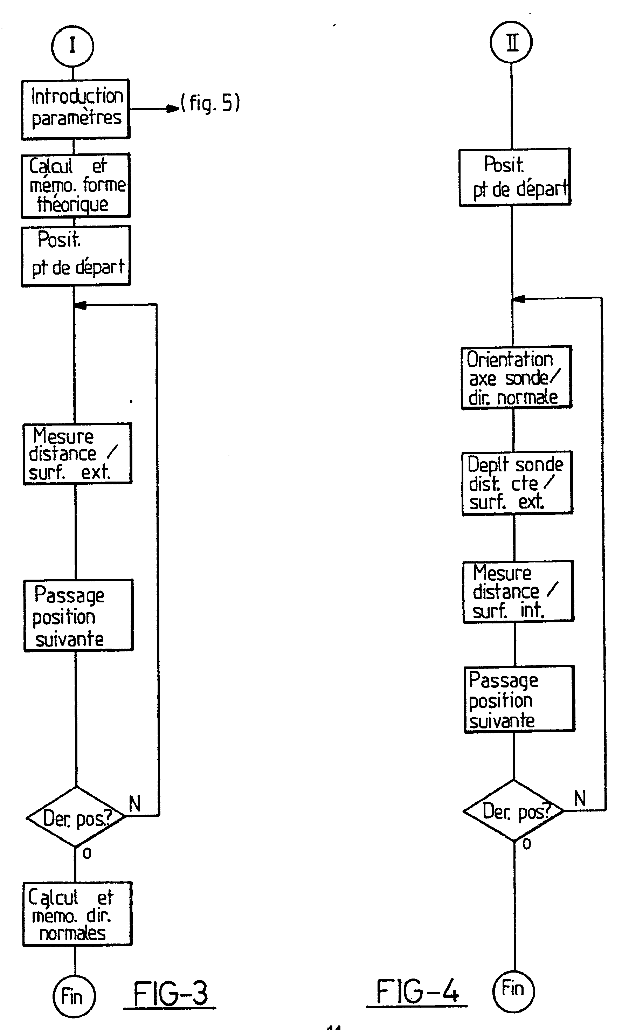

Les figures 1 et 2 illustrent le procédé de l'invention dans son aspect le plus général, les différentes étapes en étant décrites par les organigrammes des figures 3 à 5.

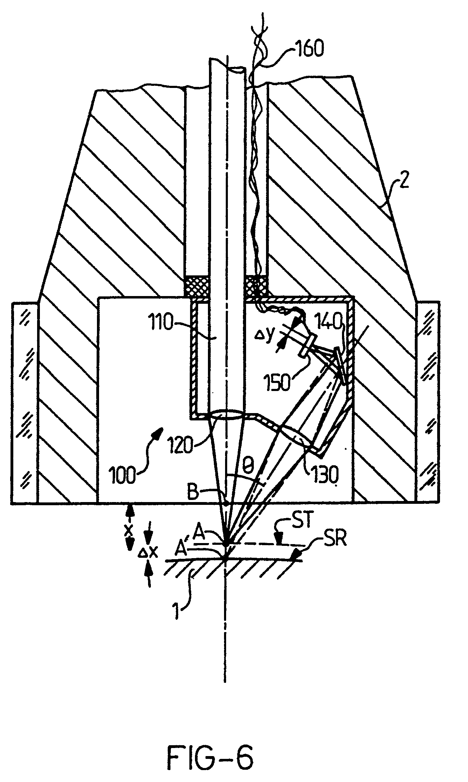

La référence 1 désigne la pièce creuse à usiner (par exemple un tube cylindrique) et la référence 2 la fraise mobile avec son capteur intégré située aux points désignés B sur la figure 1 et C sur la figure 2. La structure de la fraise avec son capteur intégré sera décrite par la suite, en référence à la figure 6.

On procède tout d'abord à une première étape de reconnaissance, conformément à l'organigramme de la figure 3 : l'opérateur introduit dans un système de calcul les différents paramètres nécessaires à l'usinage : par exemple diamètre et épaisseur du tube, position et orientation de son axe, profondeur de la rainure à usiner ou épaisseur de la toile de métal devant subsister. A partir de ces différentes informations, le calculateur détermine et mémorise une forme théorique de la surface à usiner, c'est-à-dire la forme idéale qu'aurait celle-ci en l'absence de toute irrégularité de forme ou d'épaisseur.

La fraise avec son capteur intégré est alors positionnée à un point de départ, et l'on procède à la reconnaissance de la surface extérieure sur un échantillonnage de points, dont le nombre est fonction de la précision souhaitée pour la mesure.

Cette opération, illustrée figure 1, consiste à mesurer, en chaque point, l'écart entre la surface extérieure réelle SR et la surface théorique ST déterminée préalablement par le calcul. On fait parcourir pour cela à la fraise une première trajectoire de balayage $TB_1$ définie par rapport à la surface théorique ST (puisque c'est la seule référence dont on dispose au départ), par exemple une trajectoire à distance constante de la surface théorique, l'axe de la fraise restant constamment perpendiculaire à la normale à la surface théorique (dans le cas d'un tube cylindrique, ceci revient à dire que la fraise se déplace sur un cylindre coaxial à la surface théorique, cylindrique, et enveloppant celle-ci).

Cette distance constante est bien entendu choisie de manière que la fraise ne rentre jamais en contact avec la surface réelle extérieure, compte tenu de la valeur maximum de l'amplitude des irrégularités que l'on peut attendre.

Pour chacune des positions $R_1$....$R_4$ de la fraise, on mesure ainsi des distances $A_1B_1$ ....$A_4B_4$ qui seront mémorisées pour constituer une représentation de la surface réelle SR dans la mémoire du calculateur.

Par ailleurs, à partir de l'écart mesuré en chacun des points et des écarts mesurés aux points adjacents, on détermine également la direction de la normale N à la surface extérieure réelle en ce point : sur la figure 1, on a en effet représenté deux types de déformations de la pièce à usiner : au point A2, un défaut de courbure fait en sorte que la normale N à la surface extérieure ne coupe plus l'axe O du cylindre; aux points A3 et A4, la direction de la normale est correcte, mais une légère excentration de la portion correspondante du cylindre fait en sorte que le rayon $OA_3$ ou $OA_4$ est supérieur à la valeur théorique prévue (dans ce dernier cas, un fraisage tenant compte de la seule surface théorique amènerait la fraise à déboucher à l'intérieur du tube, au lieu de laisser une mince toile de métal).

On effectue ensuite une seconde étape de reconnaissance, conformément à l'organigramme de la figure 4. Cette étape a pour objet la détermination de la surface intérieure réelle du tube, au moyen d'un capteur approprié intégré à la fraise ou substitué à celle-ci. Ce capteur est par exemple un capteur à ultra-sons de type classique, l'analyse des échos permettant de connaître l'épaisseur exacte du tube aux points mesurés.

A cet effet, on fait subir à la fraise une seconde trajectoire de balayage $TB_2$, différente de la première trajectoire de balayage $TB_1$, définie de la manière suivante : en chaque point de l'échantillonnage défini pour l'étape précédente, on oriente la sonde de manière que son axe soit toujours confondu avec la direction normale à la surface en ce point (direction normale déterminée par la mesure, au cours de l'étape précédente) ; la sonde est également déplacée de manière à se trouver toujours à une distance constante de la surface extérieure réelle (telle qu'elle a été déterminée par la mesure, de la même façon) : sur la figure 2, ceci correspond à des distances $A_1C_1$, $A_2C_2$ .... $A_8C_8$ qui sont toutes égales ; dans le cas des positions de la sonde $M_4$ et $M_5$, on voit également que cette dernière a été inclinée de manière à rattraper le défaut de courbure aux points $A_4$ et $A_5$.

De la sorte, la mesure de l'épaisseur, et donc la détermination de la surface intérieure du tube, peuvent se faire dans des conditions de mesure rigoureusement constantes - en particulier en supprimant toute erreur de parallaxe.

Dans une variante simplifiée de mise en oeuvre, il est possible de supprimer cette seconde étape de reconnaissance, la surface intérieure étant alors déterminée non plus par la mesure, mais par le calcul, en supposant une épaisseur de paroi constante.

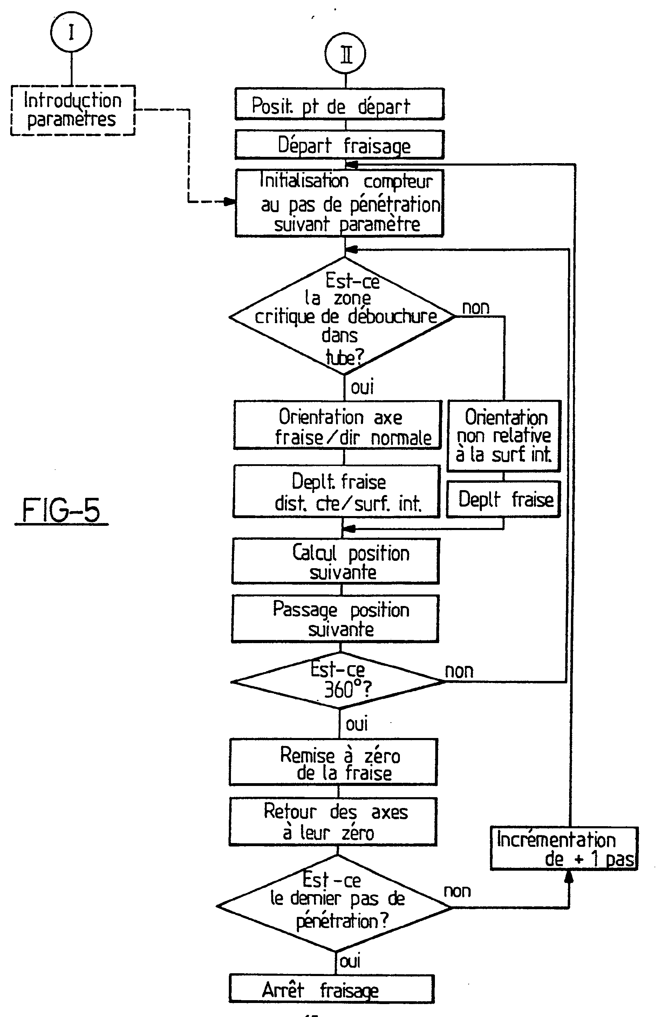

On peut alors passer à l'étape finale d'usinage, selon l'organigramme de la figure 5 : une fois la fraise mise en route, on la déplace pas à pas, sa position étant contrôlée en chacun des points.

Tout d'abord, l'orientation de l'axe de la fraise est déterminée de manière à former un angle constant par rapport à la normale à la surface réelle et à la direction tangente au tracé : le plus souvent, il s'agit simplement de positionner la fraise avec son axe confondu avec la normale à la surface à usiner ; dans certains cas on peut cependant souhaiter que l'axe de la fraise soit incliné par rapport à la normale, notamment dans le cas de l'usinage d'un chanfrein.

On ajuste également la position de la fraise de manière à conserver une distance constante par rapport à la surface intérieure de la paroi, telle qu'elle est représentée en mémoire dans le calculateur à partir des résultats des étapes de reconnaissance précédentes ; cette distance est égale à l'épaisseur de la toile de métal que l'on souhaite laisser subsister en fond de rainure.

L'usinage est ainsi poursuivi tout au long du tracé, avec un ajustement permanent de l'orientation de la fraise et de sa profondeur de pénétration dans la pièce à usiner.

La figure 6 montre un exemple de fraise, référencée 2, pourvue d'un capteur optique intégré 100 permettant de déterminer l'écart existant entre la surface réelle SR et la surface théorique ST, selon le principe classique de la triangulation optique : une émission lumineuse (cohérente ou non) est amenée au moyen d'une fibre optique 110 et focalisée par une lentille 120 en un point A, correspondant à la position de la surface théorique dans l'axe de la fraise (la distance AB entre la surface théorique et la face inférieure de la fraise étant, comme on l'a indiqué plus haut, maintenue constante). L'énergie lumineuse réfléchie est reçue et focalisée par une lentille 130 vers un miroir de renvoi 140 et un détecteur photoélectrique 150. Ce détecteur photoélectrique peut être constitué par exemple par une barrette de diodes, ou dans une version simplifiée, par une double cellule photoélectrique pour une simple mesure différentielle. Un conducteur électrique 160 renvoie le signal capté vers le calculateur de l'installation.

Tout écart $\Delta x$ existant entre la surface théorique ST et la surface réelle SR (réflexion du faisceau an A' au lieu de A) se traduira par un déplacement corrélatif $\Delta y$ du point objet sur le détecteur 150. Le déplacement $\Delta y$ peut être déterminé en fonction de la géométrie de l'ensemble ; en première approximation, cette variation est proportionnelle à l'écart $\Delta x$.

On va maintenant décrire un exemple spécifique de mise en oeuvre de ce procédé, appliqué au fraisage d'une rainure courbe dans un tube cylindrique ;

la forme de cette rainure est celle de l'intersection de deux cylindres, et sa projection dans un plan est donc circulaire. Ce procédé s'applique tout particulièrement à la réalisation d'un piquage dans une conduite de fluide radio-actif, comme enseigné par la demande de brevet français 83-04838, au nom de la Demanderesse, dont tous les enseignements peuvent être considérés comme incorporés à la présente demande.

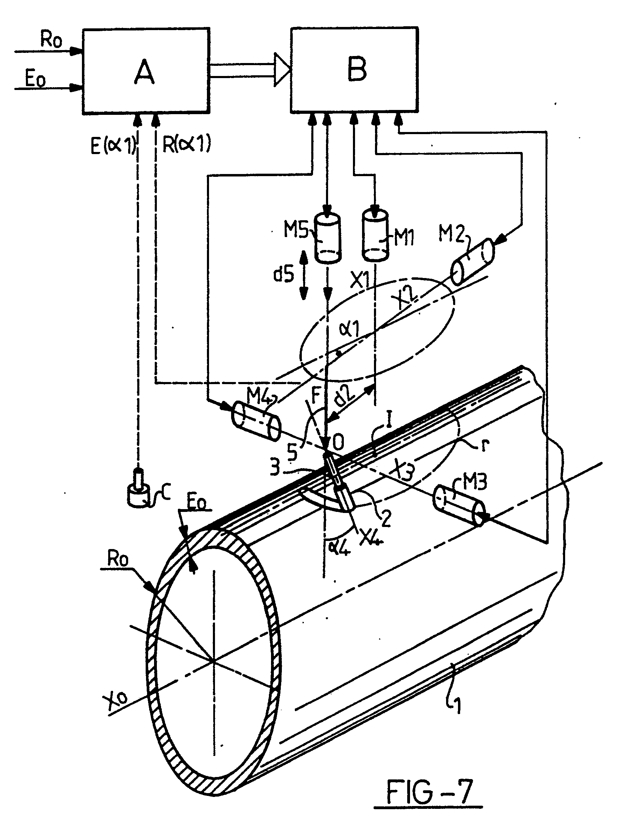

La figure 7 représente le tube cylindrique 1, par exemple métallique, disposé horizontalement de rayon $R_0$ et d'épaisseur de paroi $E_0$.

Le rayon $R_0$ est par exemple compris entre 50 et 500 mm tandis que l'épaisseur $E_0$ est comprise entre 5 et 85 mm.

Le tube 1, qui a été coupé artificiellement sur le dessin, constitue une tuyauterie continue qui se trouve en place, de manière fixe, sur un site.

L'installation comprend la fraise 2, qui est montée en bout sur un arbre 3, d'axe $X_4$, qui est entraîné en rotation au moyen d'un moteur $M_4$.

L'arbre 3 est porté par un support (non représenté à la figure 7 dans un but de clarification) qui est articulé sur un chariot 5 (figuré par un segment vertical). Le chariot 5 est agencé pour tourner autour d'un axe vertical $X_1$, que nous appellerons axe principal, qui coupe l'axe horizontal $X_0$ du tube en un point I. Le chariot 5 est décalé latéralement par rapport à l'axe $X_1$ d'une distance $d_2$ réglable. Un moteur $M_1$ permet de faire tourner le chariot autour de l'axe principal $X_1$. Un moteur $M_2$ permet de modifier la distance $d_2$. La fraise 2, et son support non représenté, sont articulés autour d'un axe $X_3$, que nous appellerons axe secondaire. Cet axe, horizontal, passe par l'axe $X_4$ de l'arbre de fraise 3 et est perpendiculaire au plan formé par les axes $X_4$ et $X_1$. Un moteur $M_3$ permet de faire basculer la fraise (et son support) autour de l'axe $X_3$. L'ensemble constitué par le chariot 5, le support de fraise, et la fraise 2, est mobile en translation verticale, parallèlement à l'axe principal $X_1$.

Ce mouvement est commandé par un moteur ou un vérin électrique $M_5$.

L'installation comprend un calculateur à mémoire A agencé pour piloter les moteurs $M_1$, $M_2$, $M_3$, $M_4$ et $M_5$, par l'intermédiaire d'une interface de commande B.

L'installation est équipée d'un dispositif de détection et de mesure des inégalités de surface du tube, qui est relié au calculateur A. Il s'agit d'une fibre optique logée coaxialement dans l'arbre de fraise 3 et dans la fraise 2 et débouchant sur la face frontale de celle-ci. Cette fibre est agencée pour fournir au calculateur, de manière connue, des informations sur la proximité d'une surface à laquelle elle fait face, en l'occurrence de la surface du tube.

L'installation est également équipée d'un dispositif de mesure de l'épaisseur de la paroi du tube, également relié au calculateur A. Ce dispositif comprend une pastille émettrice et réceptrice d'ultra-sons C, de type connu, apte à fournir au calculateur des informations sur l'épaisseur d'une paroi à laquelle elle fait face, en l'occurence la paroi du tube 1. La pastille C possède une queue identique à celle de la fraise 2, ce qui autorise son montage en bout d'arbre 3.

On se propose d'usiner dans la paroi externe du tube fixe 1, une rainure courbe, de contour fermé r, dont la forme est voisine du cercle. On souhaite que la toile séparant le fond de la rainure et la paroi interne du tube soit très fine et présente une épaisseur constante, égale par exemple à 0,2 mm.

A cet effet, on positionne l'installation au dessus du tube, au droit de la zone d'usinage prévu et on introduit dans la mémoire du calculateur des données $D_0$ et $E_0$ qui correspondent respectivement au diamètre et à l'épaisseur théoriques du tube en cette zone. On asservit la distance $d_2$, au moyen du moteur $M_2$, pour qu'elle corresponde au rayon r du contour que l'on souhaite obtenir.

On fait une première phase d'inspection à vide, c'est-à-dire sans usinage, en faisant parcourir à la fraise – qui n'est pas mise en rotation - une trajectoire correspondant au contour r de la rainure. Cette trajectoire est régie par les différentes avances données aux moteurs $M_5$ et $M_3$, en fonction de la rotation $\alpha_1$ du chariot 5 commandée par le moteur $M_1$. Le pilotage de l'installation est réalisé par le calculateur A, via l'interface de commande B, en fonction des informations mises préalablement en mémoire concernant le diamètre théorique $D_0$ du tube et son épaisseur théorique $E_0$. Ce pilotage est défini de telle manière que la face frontale de la fraise effleure la paroi externe du tube, de manière sensiblement parallèle à celle-ci, sans la toucher. Au cours du trajet, la fibre optique intégrée à la fraise détecte les inégalités de surface éventuelles de la paroi du tube, c'est-à-dire les différences dimensionnelles par rapport à son profil théorique, notamment les bosses ou les creux et les ovalisations. Le rayon réel R du tube, fonction de l'angle $\alpha_1$ de rotation du chariot 5, est une information qui est stockée dans le calculateur A.

Après un tour complet ($\alpha_1 = 360°$), on enlève la fraise 2 de son arbre 3, et on la remplace par le dispositif à ultra-sons C. On procède alors à une seconde phase d'inspection à vide, c'est-à-dire sans usinage, en faisant parcourir à la pastille à ultra-sons C une trajectoire correspodant au contour r de la rainure à fraiser. Durant ce trajet, l'épaisseur réelle E de la paroi, qui est fonction de l'angle de rotation $\alpha_1$, est enregistrée et stockée dans la mémoire du calculateur A.

Après un tour complet ($\alpha_1 = 360°$), on remplace à nouveau la pastille C par la fraise, et on procède à l'usinage proprement dit. Le moteur $M_4$ est mis en route pour faire tourner la fraise 2.

Ensuite, le calculateur A commande, via l'interface B, le fraisage de la rainure, en pilotant la rotation du chariot 5 autour de l'axe principal $X_1$ et l'avance des moteurs $M_3$ et $M_5$ en fonction de l'angle de rotation $\alpha_1$. Ce pilotage, qui tient compte du rayon réel R ($\alpha_1$) du tube et de son épaisseur effective E ($\alpha_1$), est tel que, d'une part l'axe $X_4$ de la fraise soit sensiblement perpendiculaire à la paroi externe du tube et que, d'autre part, sa pénétration dans la paroi se fasse de manière contrôlée,

La position de départ correspond, par exemple, à une zone de fraisage située sur la génératrice supérieure du tube, l'axe $X_4$ de la fraise se trouvent alors disposé verticalement, perpendiculaire à l'axe $X_0$ du tube. Après un quart de tour, l'axe de la fraise se trouve disposé radialement, c'est-à-dire est sécant et perpendiculaire à l'axe $X_0$ du tube. Après un demi-tour l'axe de la fraise à nouveau vertical ; après trois-quarts de tour, il est à nouveau radial. Entre ces quatre positions, où l'axe $X_4$ est exactement perpendiculaire à la paroi externe du tube, la fraise est pilotée par le calculateur de manière à être sensiblement perpendiculaire à la paroi externe du tube, de sorte que le fond de la rainure soit sensiblement parallèle à la paroi interne du tube.

Par pénétration "contrôlée" on veut dire que la pénétration de la fraise peut être choisie, par la programmation préalable du calculateur, de manière à ce que cette pénétration soit constante ou de manière à ce que la toile restante, c'est-à-dire l'épaisseur séparant le fond de la rainure de la paroi interne du tube, soit constante.

Il est ainsi possible de réaliser, par passes successives dans des tubes dont l'épaisseur de paroi est par exemple de quelques dizaines de millimètres, une rainure dont la toile de fond est extrêmement fine, par exemple de quelques dixièmes de millimètres d'épaisseur.

L'usinage est réalisé sur un angle $\alpha_1$ au moins égal à 360°, par exemple sur un angle de 365°, de manière à obtenir une gorge complètement fermée.

Il est possible, dans certaines applications, de modifier - toujours au moyen du calculateur A - le rayon $d_2$ de façon continue en fonction de l'angle $\alpha_1$, de manière à obtenir des contours à courbure variable.

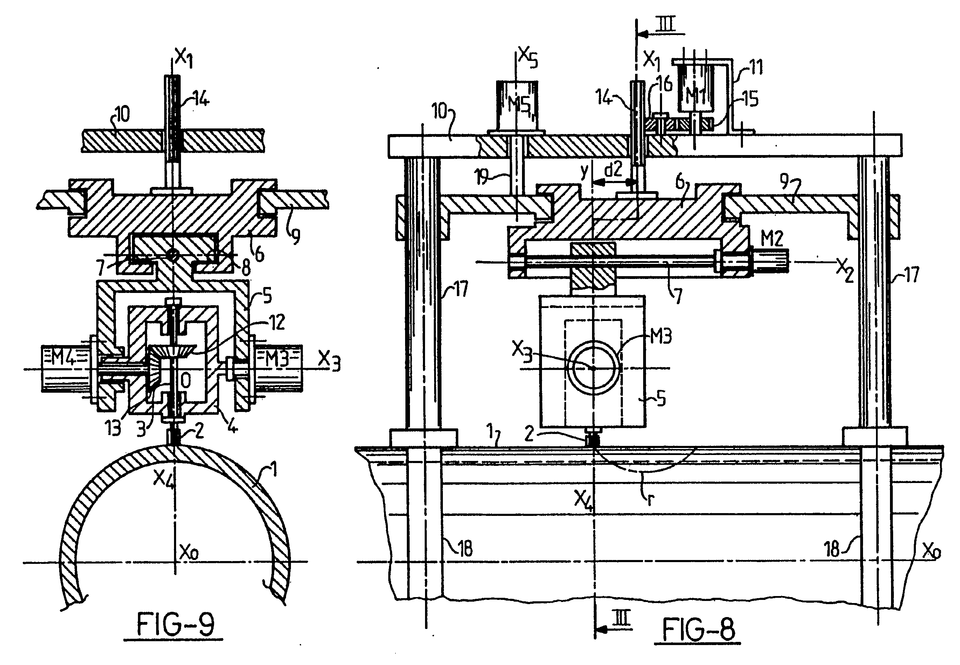

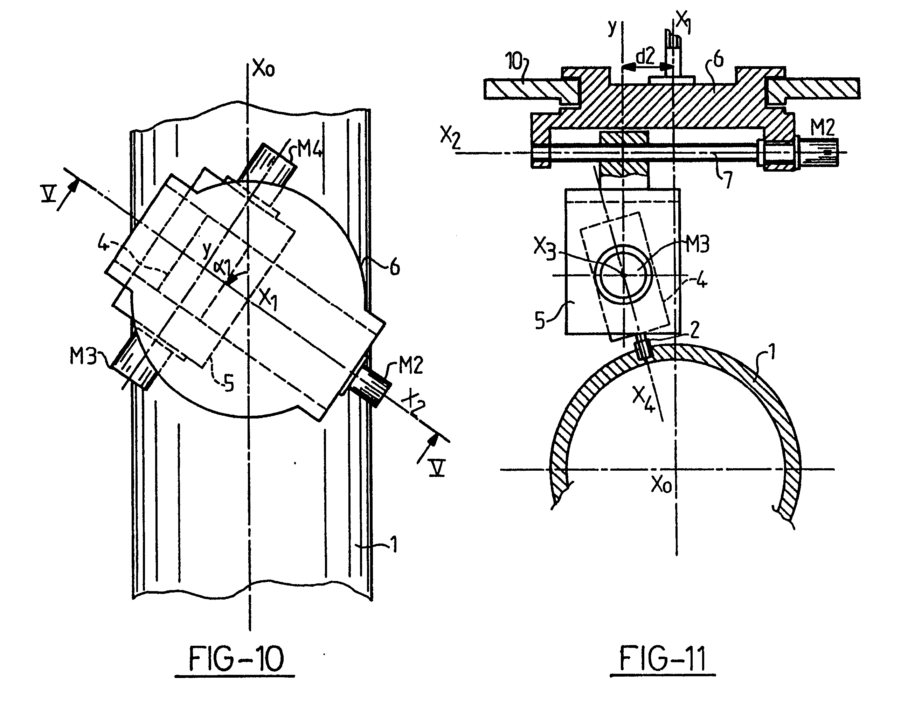

Les figures 8 à 11 montrent un mode de réalisation d'une installation d'usinage permettant de mettre en oeuvre le procédé qui vient d'être décrit.

L'installation a la forme d'un portique comprenant une plaque horizontale 10 et une paire de colonnes verticales 17 qui sont fixées sur le tube à usiner 1 au moyen de brides de fixation appropriées 18.

L'axe de fraise 3 est guidé en rotation dans un support 4 en forme d'étrier. Il porte un pignon coaxial conique 12 en prise avec un pignon complémentaire 13, dont l'axe est disposé perpendiculairement par rapport à l'axe $X_4$ de l'arbre 3. Le support 4 est articulé dans la partie inférieure, en forme de chape, d'un chariot 5. Les ailes de cette chape portent l'une un moteur

$M_3$ apte à faire basculer le support 4 autour d'un axe $X_3$ perpendiculaire à $X_4$, et l'autre un moteur $M_4$ apte à entraîner la fraise 2 par l'intermédiaire des pignons coniques 12, 13. La partie supérieure du chariot a la forme d'un T agencé pour coulisser dans un glissière horizontale 8 en queue d'aronde formée dans un plateau 6 approximativement circulaire. La partie en T du chariot 5 est traversée par un trou taraudé dont l'axe $X_2$ est parallèle à la glissière 8 et dans lequel pénètre une tige filtée 7 portée par le plateau 6. Un moteur $M_2$ solidaire du plateau 6 est adapté pour faire tourner la tige 7 afin de déplacer le chariot 5 dans la glissière 8. Le plateau 6 est solidaire, en son centre, d'un arbre cannelé vertical 14 d'axe $X_1$ agencé pour être entraîné en rotation, par l'intermédiaire de pignons 15, 16, par un moteur $M_1$. Ce dernier est fixé au moyen d'une patte 11 à la plaque de bâti 10. La rotation du moteur $M_1$ commande la rotation du plateau 6, par l'intermédiaire de l'arbre 14, avec possibilité de déplacement axial de ce dernier.

Le plateau 6 est guidé en rotation sur une armature 9, en forme de plaque horizontale, qui est montée à coulissement sur les colonnes verticales 17. Le coulissement de l'armature 9 est commandé par un moteur ou un vérin électrique $M_5$, par l'intermédiaire d'une tige 19 d'axe vertical $X_5$.

Pour usiner une rainure dans la paroi du tube, après détection et enregistrement éventuels préalables des anomalies de surface et de l'épaisseur de paroi, on règle d'abord le rayon de courbure $d_2$ à la valeur souhaitée au moyen du moteur $M_2$. Ensuite, à partir de la position initiale dans laquelle la fraise 2 se trouve en contact avec la génératrice supérieure du tube 1 (position des figures 7 et 8), on fait tourner le plateau 6 autour de l'axe $X_1$ au moyen du moteur $M_1$. L'axe vertical médian Y du chariot 5 va donc décrire une trajectoire circulaire autour de $X_1$.

Le contrôle de l'inclinaison de l'axe $X_4$ de la fraise en cours d'usinage est obtenu par la mise en route, dans un sens ou dans un autre, du moteur $M_3$ qui commande le basculement de l'étrier 4. On remarquera que la transmission, par pignons coniques, de commande de la fraise autorise ce basculement.

Le contrôle de la pénétration de la fraise dans la paroi du tube est obtenu par mise en route, dans un sens ou dans l'autre, du moteur $M_5$ qui provoque la montée ou la descente de l'armature 9 et de l'ensemble des organes portés par celle-ci. Durant ce mouvement, l'entraînement en rotation du plateau 6 reste possible grâce à la présence de l'arbre cannelé 14 qui engrène avec le pignon 16 commandé par le moteur $M_1$.

On remarquera la souplesse d'emploi de l'installation qui vient d'être décrite. Sa mise en place est très aisée sur un site, son poids total étant inférieur à 50 kg. Les liaisons électriques entre l'installation et l'interface de commande B peuvent être assurées par un cordon unique. Cette interface reçoit tous les équipements de puissance aptes à commander les moteurs à courant continu et pas à pas et à recevoir les signaux de mesure des différents capteurs et codeurs.

Bien que, dans la description qui précède, la rainure ait été usinée sur la partie supérieure du tube, il va de soi que cet usinage peut se faire en toute zone du tube par fixation appropriée de l'installation sur celui-ci.

## Revendications

1. Pocédé d'usinage d'une pièce creuse (1) par fraisage le long d'un tracé prédéterminé par rapport à une surface théorique (ST) de celle-ci, au moyen d'une fraise (2) montée en bout d'un arbre moteur porté par un support mobile orientable selon au moins deux degrés de liberté en basculement et au moins un degré de liberté en translation, dans lequel la quantité de matière à enlever en un point du tracé est déterminée par un écart de consigne entre la face inférieure de la fraise et une surface réelle de référence (SR), surface intérieure ou surface extérieure de la pièce, caractérisé en ce qu'il comprend :

· une première étape de reconnaissance de la surface extérieure de la pièce, consistant :

1. à faire parcourir à la fraise une première trajectoire (TB1) à une distance constante ($A_1B_1...A_4B_4$) de la surface théorique (ST), cette distance étant choisie de manière que la fraise ne vienne jamais en contact avec la pièce, et

2. à échantillonner une série de points du tracé,

2.1 en mesurant et en mémorisant, au moyen d'un capteur (100) intégré à la fraise, la distance séparant la face inférieure de la fraise de la surface extérieure réelle de la pièce dans l'axe de la fraise, et en déterminant l'écart relatif ($\Delta x$) en chaque point échantillonné entre la surface réelle et la surface théorique,

2.2 en déterminant et en mémorisant, à partir de l'écart mesuré en chaque point échantillonné et des écarts mesurés aux points adjacents, la direction de la normale (N) à la surface extérieure réelle en chaque point échantillonné,

· une étape d'usinage, consistant à faire parcourir à nouveau à la fraise le trajet prédéterminé, la position et l'orientation de la fraise étant commandées de manière à ce que, en chaque point de l'échantillonnage, l'axe de la fraise forme un angle constant par rapport à la normale à la surface réelle et à la direction tangente au tracé en ce point, et que la distance séparant la face inférieure de la fraise de la surface de référence de la pièce soit rendue égale à l'écart de consigne pour ce point.

2. Un procédé selon la revendication 1, dans lequel la surface de référence est la surface intérieure de la pièce, caractérisé en ce qu'il est prévu une étape de détermination de la surface intérieure réelle de la pièce, à partir des données relatives à la surface extérieure réelle précédemment mémorisées.

3. Un procédé selon la revendication 2, caractérisé en ce que la surface intérieure est déterminée par calcul, à partir d'une valeur d'épaisseur théorique constante dans la direction normale à la surface extérieure réelle de la pièce.

4. Un procédé selon la revendication 2, caractérisé en ce que l'étape de détermination de la surface intérieure de la pièce est une seconde étape de reconnaissance, consistant à faire parcourir à la fraise une seconde trajectoire (TB2) le long de laquelle, en chaque point de l'échantillonnage, on positionne la fraise à une distance constante ($A_1C_1$ ... $A_8C_8$) de la surface extérieure réelle (SR) de la pièce et avec une orientation telle que son axe coïncide avec la direction normale correspondante, puis on mesure et on mémorise, au moyen d'un capteur de profondeur intégré à la fraise, l'épaisseur de la pièce, de manière à déterminer la position de la surface intérieure de la pièce en ce point.

5. Procédé selon l'une des revendications 1 à 4, dans lequel la pièce à usiner est un tube cylindrique, caractérisé en ce qu'on soumet le support mobile simultanément aux trois mouvements suivants :
· une rotation autour d'un axe principal ($X_1$) qui est sécant et perpendiculaire à l'axe ($X_0$) du tube,
· un basculement autour d'un axe secondaire ($X_3$) qui coupe l'axe ($X_4$) de la fraise, et est perpendiculaire au plan formé par ce dernier et par l'axe principal ($X_1$),
· une translation suivant une direction parallèle à l'axe principal ($X_1$),
ces deux derniers mouvements étant asservis au premier de telle sorte que l'axe ($X_4$) de la fraise soit constamment sensiblement perpendiculaire à la paroi du tube et que la profondeur de pénétration de la fraise dans la paroi du tube soit constamment contrôlée.

6. Procédé selon l'une des revendications 1 à 5, caractérisé en ce qu'on réalise la rotation du support mobile autour de l'axe principal ($X_1$) avec une rayon ($d_2$) variable.

7. Procédé selon la revendication 6 pour la réalisation d'une rainure à contour fermé dont la forme est voisine d'un cercle, caractérisé en ce qu'on réalise la rotation du support mobile autour de l'axe principal ($X_1$) sur un angle au moins égal à 360°.

8. Installation d'usinage pour la mise en oeuvre du procédé selon l'une des revendications 5 à 7, caractérisé en ce qu'elle comprend :
· un bâti (17, 18, 10) fixe sur et par rapport au tube,
· une armature (9) guidée en translation sur le bâti pour coulisser suivant une direction perpendiculaire à l'axe ($X_0$) du tube,
· un plateau (6) guidé en rotation sur l'armature pour tourner autour d'un axe principal ($X_1$) qui est sécant et perpendiculaire à l'axe ($X_0$) du tube,
· un chariot (5) guidé en translation sur le plateau (6) pour coulisser suivant un axe ($X_2$) sécant et perpendiculaire à l'axe principal ($X_1$),
· un étrier (4) articulé sur le chariot pour basculer autour d'un axe secondaire ($X_3$) qui est orthogonal à l'axe ($X_2$) du coulissement du chariot,
· une fraise (2) montée en bout sur un arbre (3) qui est guidé en rotation dans l'étrier articulé (4) et dont l'axe ($X_4$) est sécant et perpendiculaire à l'axe secondaire ($X_3$),
· un moyen ($M_5$) de commande du déplacement de ladite armature (9) sur le bâti fixe,
· un moyen ($M_1$) de commande de la rotation dudit plateau (6) sur l'armature,
· un moyen ($M_2$) de commande du déplacement dudit chariot (5) sur le plateau,
· un moyen ($M_3$) de commande du basculement dudit étrier (4) autour de l'axe secondaire ($X_3$),
· un moyen ($M_4$) de commande de la rotation de la fraise (2) sur son axe ($X_4$).

9. Installation d'usinage selon la revendication 8, caractérisé par le fait qu'elle est équipée d'un calculateur à mémoire (A) qui assure le pilotage des moyens de commande ($M_5$),($M_2$) & ($M_3$), en asservissement avec le mouvement de rotation du plateau (6) autour de l'axe principal ($X_1$), de telle manière que l'axe ($X_4$) de la fraise soit constamment sensiblement perpendiculaire à la paroi du tube (1), et que la pénétration de la fraise dans la paroi du tube se fasse de manière contrôlée.

10. Installation d'usinage selon l'une des revendications 8 et 9, caractérisée en ce que le moyen de commande ($M_1$) de rotation du plateau (6) est un moteur électrique à commande analogique.

11. Installation d'usinage selon l'une des revendications 8 à 10, caractérisée en ce que le moyen de commande ($M_2$) de déplacement de chariot (5) est un moteur électrique à commande numérique.

12. Installation d'usinage selon l'une des revendications 8 à 11, caractérisée en ce que le moyen de commande ($M_3$) du basculement de l'étrier (4) est un moteur électrique à commande analogique.

13. Installation d'usinage selon l'une des revendications 8 à 12, caractérisée en ce que le moyen de commande ($M_5$) du déplacement de l'armature (9) est un vérin électrique à commande numérique.

14. Installation d'usinage selon l'une des revendications 8 à 13, caractérisée en ce qu'elle est équipée d'un dispositif de détection et de mesure des inégalités de surface de la paroi externe du tube.

15. Installation d'usinage selon la revendication 14, caractérisée en ce que ledit dispositif de détection et de mesure comprend une fibre optique intégrée dans la fraise (2).

16. Installation d'usinage selon l'une des revendications 8 à 15, caractérisée en ce qu'elle est équipée d'un dispositif de mesure de l'épaisseur de paroi du tube.

17. Installation d'usinage selon la revendication 16, caractérisée en ce que ledit dispositif de mesure comprend une pastille à ultra-sons (C) adaptée pour être montée en bout de l'arbre de fraise (3), à la place de cette dernière.

## Ansprüche

1. Verfahren zur Bearbeitung eines hohlen Werkstücks (1) durch Fräsen entlang einer vorbestimmten Linie bezüglich einer theoretischen Oberfläche (ST) desselben mittels eines Fräse (2), die am Ende einer Motorwelle montiert ist, die von einer beweglichen Stütze getragen wird, die entlang wenigstens zweier Freiheitsgrade kippbar und entlang wenigstens eines Freiheitsgrad in Translation beweglich ist, bei dem die Menge des zu entfernenden Materials an einem Punkt der Linie durch einen Einstellabstand zwischen der Unterseite der Fräse und einer reellen Referenzoberfläche (SR), einer inneren oder äußeren Fläche des Werkstücks, bestimmt wird, dadurch gekennzeichnet, daß es aufweist :

· einen ersten Verfahrensschritt zum Erkennen der äußeren Oberfläche des Werkstücks, der darin besteht :

1. die Fräse eine erste Trajektorie (TB1) mit einem konstanten Abstand ($A_1B_1...A_4B_4$) von der theoretischen Oberfläche (ST) durchlaufen zu lassen, wobei dieser Abstand so ausgewählt ist, daß die Fräse nie mit dem Werkstück in Berührung kommt, und

2. Meßwerte für eine Reihe von Punkten auf der Linie aufzunehmen,

2.1 indem mittels eines in der Fräse integrierten Aufnehmers (100) der Abstand zwischen der unteren Seite der Fräse und der äußeren, reellen Oberfläche des Werkstücks In der Achse der Fräse gemessen und gespeichert wird und indem der relative Abstand ($\Delta x$) zwischen der reellen und der theoretischen Oberfläche in jedem vermessenen Punkt bestimmt wird.

2.2 indem ausgehend von in jedem Meßpunkt gemessenen Abstand und von den in den angrenzenden Punkten gemessenen Abständen die Richtung der Normalen (N) zur äußeron, reellen Oberfläche in jedem Meßpunkt bestimmt und gespeichert wird,

· einen Bearbeitungsschritt, der darin besteht, die Fräse erneut die vorgegebene Linie durchlaufen zu lassen, wobei die Position und Ausrichtung der Fräse so gesteuert werden, daß in jedem Meßpunkt die Fräsenachse einen konstanten Winkel bezüglich der Normalen der reellen Oberfläche und bezüglich der Richtung der Tangente zur Linie in diesem Punkt bildet und daß der Abstand zwischen der Unterseite der Fräse von der Referenzoberfläche des Werkstücks gleich dem Einstellabstand für diesen Punkt ist.

2. Verfahren nach Anspruch 1, bei dem die Referenzoberfläche die innere Oberfläche des Werkstücks ist, dadurch gekennzeichnet, daß ein Verfahrensschritt zum Bestimmen der inneren, reellen Oberfläche des Werkstücks ausgehend von den Daten bezüglich der äußeren, reellen Oberfläche, die vorher gespeichert wurden, vorgesehen ist.

3. Verfahren nach Anspruch 2. dadurch gekennzeichnet, daß die innere Oberfläche durch Berechnung ausgehend von einem konstanten, theoretischen Dickewert in Richtung der Normalen zur äußeren, reellen Oberfläche des Werkstücks bestimmt wird.

4. Verfahren nach Anspruch 2, dadurch gekennzeichnet, daß der Schritt zur Bestimmung der inneren Oberfläche des Werkstücks ein zweiter Verfahrensschritt zum Erkennen ist, der darin besteht, die Fräse eine zweite Trajektorie (TB2) durchlaufen zu lassen, entlang derer man in jedem Meßpunkt die Fräse in einem konstanten Abstand ($A_1C_1...A_8C_8$) von der äußeren, reellen Oberfläche (SR) des Werkstücks mit einer solchen Ausrichtung anordnet, daß ihre Achse mit der entsprechenden Normalrichtung zusammenfällt, und man dann mittels eines in der Fräse Integrierten Tiefenmeßfühlers die Dicke des Werkstücks so mißt und speichert, daß die Position der inneren Oberfläche des Werkstücks in diesem Punkt bestimmt wird.

5. Verfahren nach einem der Ansprüche 1 bis 4, bei dem das Werkstück ein zylinderförmiges Rohr ist, dadurch gekennzeichnet, daß man die bewegliche Stütze gleichzeitig folgenden drei Bewegungen unterwirft :

· einer Orehung um eine Hauptachse ($X_1$), die die Achse ($X_0$) des Rohrs schneidet und dazu senkrecht ist,

· ein Kippen um eine sekundäre Achse ($X_3$), die die Achse ($X_4$) der Fräse schneidet und senkrecht zur Ebene steht, die von der letzteren mit der Hauptachse ($X_1$) gebildet wird,

· eine Translation entlang einer Richtung parallel zur Hauptachse ($X_1$),

wobei die beiden letzteren Bewegungen so mit der ersten gesteuert werden, daß die Achse ($X_4$) der Fräse konstant im wesentlichen senkrecht zur Rohrwand ist und daß die Eindringtiefe der Fräse in die Rohrwand konstant gesteuert wird.

6. Verfahren nach elnem der Ansprüche 1 bis 5. dadurch gekennzeichnet, daß man die Drehung der beweglichen Stütze um die Hauptachse ($X_1$) mit einem variablen Radius ($d_2$) durchführt.

7. Verfahren nach Anspruch 6 für die Herstellung einer Kerbe mit geschlossener Kontur, deren Form der eines Kreises ähnlich ist, dadurch gekennzeichnet, daß man die Drehung der beweglichen Stütze um die Hauptachse ($X_1$) um einen Winkel von wenigstens 360° durchführt.

8. Bearbeitungseinrichtung zum Durchführen des Verfahrens nach einem der Ansprüche 5 bis 7, dadurch gekennzeichnet, daß sie umfaßt :

· ein auf dem und bezüglich des Rohres festes Gestell (17, 18, 10),

· eine in Translationsrichtung zum Gleiten entlang einer Richtung senkrecht zur Rohrachse ($X_0$) auf dem Gestell geführte Bewehrung (9),

· eine in Drehrichtung auf dem Gestell zum Drehen um eine Hauptachse ($X_1$), die die Rohrachse ($X_0$) schneidet und senkrecht darauf steht, geführte Platte (6),

· einen in Translationsrichtung auf der Platte (6) zum Gleiten entlang einer Achse ($X_2$), die die Hauptachse ($X_1$) schneidet und senkrecht darauf steht, geführten Wagen (5),

· einen gelenkig auf dem Wagen zum Kippen um eine sekurdäre Achse ($X_3$),die senkrecht zur Gleitachse ($X_2$) des Wagens ist, befestigten Bügel (4),

· eine am Ende einer Motorwelle (3) montierte Fräse (2), die n der Drehung von dem gelenkig verbundenen Bügel (4) geführt wird und deren Achse ($X_4$) die sekundäre Achse ($X_3$) schneidet und dazu senkrecht ist,

· eine Steuerungsvorrichtung ($M_5$) für die Bewegung der Bewehrung (9) auf dem festen Gestel,

· eine Steuervorrichtung ($M_1$) für die Drehung der Platte (6) auf der Bewehrung,

· eine Steuervorrichtung ($M_2$) für die Bewogung des Wagens (5) auf der Platte,

· eine Steuervorrichtung ($M_3$) für das Kippen des Bügels (4) um die sekundäre Achse ($X_3$),

· eine Steuervorrichtung ($M_4$) für die Drehung der Fräse (2) um ihre Achse ($X_4$).

9. Bearbeitungseinrichtung nach Anspruch 8, gekennzeichnet durch die Tatsache, daß sie mit einem Rechner mit einem Speicher (A) ausgestattet ist, der die Regulierung der Steuervorrichtungen ($M_5$), ($M_2$) & ($M_3$) in Rückführung mit der Rotationsbewegung der Platte (6) um die Hauptachse ($X_1$) so sicherstellt, daß die Achse (X4) der Fräse konstant im wesentlichen senkrecht zur Rohrwand (1) ist und daß die Eindringtiefe der Fräse in die Rohrwand kontrolliert wird.

10. Bearbeitungseinrichtung nach einem der Ansprüche 8 und 9, dadurch gekennzeichnet. daß die Steuerungsvorrichtung ($M_1$) für die Drehung der Platte (6) ein Elektromotor mit Analogsteuerung ist.

11. Bearbeitungseinrichtung nach einem der Ansprüche 8 bis 10, dadurch gekennzeichnet, daß die Steuerungsvorrichtung ($M_2$) für die Bewegung des Wagens (5) ein Elektromotor mit Digitalsteuerung ist.

12. Bearbeltungseinrichtung nach einem der Ansprüche 8 bis 11. dadurch gekennzeichnet, daß die Steuerungsvorrichtung ($M_3$) für das Kippen des Bügels (4) ein Elektromotor mit Analogsteuerung ist.

13. Bearbeitungseinrichtung nach einem der Ansprüche 8 bis 12, dadurch gekennzeichnet, daß die Steuerungsvorrichtung ($M_5$) für die Bewegung der Bewehrung (9) eine elektrische Winde mit Digitalsteuerung ist.

14. Bearbeitungsvorrichtung nach einem der Ansprüche 8 bis 13, dadurch gekennzeichnet, daß sie mit einer Vorrichtung zur Detektion und zum Messen von Unebenheiten der Oberfläche der äußeren Rohrwand ausgestattet ist.

15. Bearbeitungsvorrichtung nach Anspruch 14, dadurch gekennzeichnet, daß die Detektions- und Meßvorrichtung eine in die Fräse (2) integrierte, optische Faser umfaßt.

16. Bearbeitungsvorrichtung nach einem der Ansprüche 8 bis 15, dadurch gekennzeichnet, daß sie mit einer Vorrichtung zum Messen der Dicke der Rohrwand ausgestattet ist.

17. Bearbeitungsvorrichtung nach Anspruch 16, dadurch gekennzeichnet, daß die Meßvorrichtung ein Ultraschallplättchen (C) umfaßt, das geeignet ist, am Ende der Fräsenwelle (3) an deren Stelle montiert zu werden.

**Claims**

1. A method of machining a hollow part (1) by milling along a line of cut which is predetermined relative to a theoretical surface (ST) of said part, said milling being performed by means of a cutter (2) mounted at the end of a drive shaft which is carried by a moving support, said support being displaceable with at least two degrees of freedom in tilting and with at least one degree of freedom in translation, the quantity of material to be removed at any point of said line being determined by a reference difference between the end face of the cutter and a real reference surface (SR), which real reference surface may be the inside surface or the outside surface of said part, said method being characterized in that it comprises :

a first stage of reconnaissance of the outside surface of the part, said stage consisting in

1. causing the cutter to follow a first trajectory ($TB_1$) at a constant distance ($A_1B_1...A_4B_4$) from the theoretical surface (ST) of the part, said distance being chosen in such a manner as to ensure that the cutter never comes into contact with the part, and

2. in sampling a series of points along said line of cut :

2.1 in measuring and storing the distance between the end face of the cutter and the real outside surface of the part on the axis of the cutter by means of a sensor (100) integrated in the cutter, and determining the relative error ($\Delta x$) at each sampled point between the real surface and the theoretical surface;

2.2 in determining and storing the direction of the normal (N) to the real outside surface at each sampled point, on the basis of the error measured at each sampled point and on the errors measured at the points adjacent thereto ;

a machining stage consisting in causing the cutter to follow said predetermined trajectory a subsequent time, with the position and the orientation of the cutter being controlled in such a manner that, at each sample point, the axis of the cutter is at a constant angle relative to the normal to the real surface and to the tangential direction to said line of cut at said point, and the distance between the end face of the cutter and the reference surface of the part is made equal to the reference difference for said point.

2. A method according to claim 1, wherein the reference surface is the inside surface of the part, characterized in that a stage is provided for determining the real inside surface of the part on the basis of previously stored data relating to the real outside surface thereof.

3. A method according to claim 2, characterized in that the inside surface is determined by calculation on the basis of a theoretical constant thickness value in the normal direction to the real outside surface of the part.

4. A method according to claim 2, characterized in that the stage of determining the inside surface of the part is a second reconnaissance stage, consisting in causing the cutter to follow a second trajectory $(TB_2)$ around which the cut is positioned at each sample point at a constant distance $(A_1C_1...A_8C_8)$ from the real outside surface $(SR)$ of the part and at an orientation such that its axis coincides with the corresponding normal direction, the thickness of the part at each sample point is then measured and stored by means of a depth probe integral with the cutter, thereby determining the position of the inside surface of the part at said point.

5. A method according to one of claims 1 through 4, wherein the part to be machined is a cylindrical tube, characterized in that the moving support is simultaneously subjected to three motions :

rotation about a main axis $(X_1)$ which intersects and is perpendicular to the axis $(X_0)$ of the tube ;

tilting about a secondary axis $(X_3)$ which intersects the cutter axis $(X_4)$ and is perpendicular to the plane constituted by said cutter axis and said main axis $(X_1)$ ;

translation along a direction parallel to said main axis $(X_1)$ ;

with the two last motions being servocontrolled as a function of the first in such a manner as to ensure that the cutter axis $(X_4)$ remains constantly substantially perpendicular to the wall of the tube and that the cutter penetration depth into the wall of the tube is under constant control.

6. A method according to one of claims 1 through 5, characterized in that the moving support is caused to rotate at a variable radius $(d_2)$ about said main axis $(X_1)$.

7. A method according to claim 6 for providing a groove following a closed contour which is close to a circle in shape, characterized in that the moving support is caused to rotate about the main axis $(X_1)$ through an angle of not less than 360°.

8. Machining apparatus for implementing the method according to one of claims 5 through 7, characterized in that it comprises :

a frame (17, 18, 10) which is fixed on and relative to said tube ;

a plate support (9) slidably mounted relative to said frame in order to slide in a direction which is perpendicular to the axis $(X_0)$ of said tube ;

a plate (6) rotatably mounted on said plate support to rotate about a main axis $(X_1)$ which intersects the axis $(X_0)$ of said tube and which is perpendicular thereto ;

a carriage (5) slidably mounted on said plate (6) to slide along an axis $(X_2)$ which intersects said main axis $(X_1)$ and which is perpendicular thereto ;

a bracket (4) hinged to said carriage to tilt about a secondary axis $(X_3)$ which is orthogonal to the carriage slide axis $(X_2)$ ;

a cutter (2) mounted on the end of a shaft (3) which is rotatably mounted in said tilting bracket (4) and whose axis $(X_4)$ intersects said secondary axis $(X_3)$ and is perpendicular thereto ;

a control means $(M_5)$ for controlling displacement of said plate support (9) relative to said fixed frame ;

a control means $(M_1)$ for controlling rotation of said plate (6) relative to said plate support ;

a control means $(M_2)$ for controlling displacement of said carriage (5) relative to said plate ;

a control means $(M_3)$ for controlling tilting of said tilting bracket (4) about said secondary axis $(X_3)$ ;

a control means $(M_4)$ for controlling rotation of said cutter (2) about its axis $(X_4)$.

9. Machining apparatus according to claim 8, characterized by the fact that it is fitted with a computer having a memory (A), which drives said control means $(M_5)$, $(M_2)$ and $(M_3)$ as a function of the rotation of said plate (6) about said main axis $(X_1)$ in such a manner as to ensure that the axis $(X_4)$ of said cutter remains constantly substantially perpendicular to the wall of said tube (1), and that said cutter penetrates in controlled manner into the thickness of the wall of said tube.

10. Machining apparatus according to one of claims 8 and 9, characterized in that said control means $(M_1)$ for controlling rotation of said plate (6) is constituted by an electric motor under analog control.

11. Machining apparatus according to one of claims 8 through 10, characterized in that said control means $(M_2)$ for controlling carriage (5) displacement is constituted by an electric motor under digital control.

12. Machining apparatus according to one of claims 8 through 11, characterized in that said control means $(M_3)$ for tilting said bracket (4) is constituted by an electric motor under analog control.

13. Machining apparatus according to one of claims 8 through 12, characterized in that said control

means ($M_5$) for controlling displacement of said plate carrier (9) is constituted by an electric actuator under digital control.

14. Machining apparatus according to one of claims 8 through 13, characterized in that it includes a device for detecting and measuring unevenness in the surface of the outside wall of said tube.

15. Machining apparatus according to claim 14, characterized in that said device for detecting and measuring unevenness comprises an optical fiber integrated in said cutter (2).

16. Machining apparatus according to one of claims 8 through 15, characterized in that it includes a device for measuring the thickness of the wall of said tube.

17. Machining apparatus according to claim 16, characterized in that said device for measuring thickness comprises an ultrasonic emitter/receiver (C) suitable for mounting at the end of the cutter shaft (3) instead of said cutter.

FIG-1

FIG-2

FIG-3

FIG-4

① Introduction paramètres

② Posit. pt de départ

Départ fraisage

Initialisation compteur au pas de pénétration suivant paramètre

Est-ce la zone critique de débouchure dans tube? — non

oui

Orientation axe fraise/dir normale

Orientation non relative à la surf int.

Deplt. fraise dist. cte/surf. int.

Deplt fraise

Calcul position suivante

Passage position suivante

Est-ce 360°? — non

oui

Remise à zéro de la fraise

Retour des axes à leur zéro

Incrémentation de + 1 pas

Est-ce le dernier pas de pénétration? — non

oui

Arrêt fraisage

FIG-5

FIG-6

FIG -7

FIG-9

FIG-8

EP 0 210 080 B1

FIG-11

FIG-10